# EUROPEAN PATENT SPECIFICATION

(11) **EP 3 416 014 B1**
(45) Date of publication and mention of the grant of the patent: **26.02.2020**
(21) Application number: 18177426.6
(22) Date of filing: 12.06.2018
(51) Int. Cl.: G05B 23/02, G05B 9/03, G06F 11/16

(54) **PROCESS DATA SYNCHRONIZATION BETWEEN REDUNDANT PROCESS CONTROLLERS**
PROZESSDATENSYNCHRONISATION ZWISCHEN REDUNDANTEN PROZESSSTEUERGERÄTEN
PROCÉDÉ DE SYNCHRONISATION DE DONNÉES DE PROCESSUS ENTRE DES UNITÉS DE COMMANDE REDONDANTES

(30) Priority: 16.06.2017 US 201762520912 P; 08.06.2018 US 201816003588
(43) Date of publication of application: 19.12.2018
(73) Proprietor: Honeywell International Inc., Morris Plains, NJ New Jersey 07950 (US)
(72) Inventor: WENSEN, Aad van, Morris Plains, NJ 07950 (US); BEERENS, Anton, Morris Plains, NJ 07950 (US)
(74) Representative: Houghton, Mark Phillip

(56) References cited:
- EP-A2- 0 416 891
- US-A- 4 672 529
- US-A1- 2007 033 435
- US-A1- 2015 378 337

## Description

### CROSS REFERENCE TO RELATED APPLICATIONS

This application claims the benefit of Provisional Application Serial No. 62/520,912 entitled "PROCESS DATA SYNCHRONIZATION BETWEEN REDUNDANT PROCESS CONTROLLERS", filed on June 16, 2017.

### FIELD

Disclosed embodiments relate to the synchronization of data received from input and output modules for redundant process controllers in process control systems.

### BACKGROUND

The failure of an industrial control system can lead to costly downtime. There is expense involved in restarting a process along with the actual production losses resulting from such a failure. If the process is designed to operate without supervisory or service personnel, all of the components in the process control system generally need to be fault-tolerant. A fault-tolerant industrial process control system may employ a 1:1 redundancy system to synchronize the data in respective memories of a primary process controller and a secondary process controller. These memories are maintained in an identical fashion in both a primary memory associated with a primary process controller and a secondary memory associated with a redundant secondary process controller.

The process controllers can comprise a Programmable Logic Controller (PLC) which includes various components that work together to bring information received from the field devices through input/output modules (IOs) that provide analog inputs (AIs) and digital inputs (DIs), evaluate that information along with other information including statuses, maintenance overrides, loop faults, channel faults and fault reaction, and then send control information back out to the IOs as analog outputs (AOs) and digital inputs (DOs) for controlling various controllable field devices such as actuators. These basic PLC components comprise a power supply, central processing unit (CPU) or other processor (e.g., microcontroller) that is referred to herein generally as a 'process controller', co-processor or co-controller modules, and IOs that are generally separate from the process controller.

In a known redundant control system there are a plurality of IO channels which can be digital or analog. These IO channels can be non-redundant meaning each process controller is physically connected to a shared IO, or can be configured redundant meaning each process controller is connected to a dedicated IO which separately process the field values received from field devices such as sensors. The IO's processing of field value data received from sensors includes converting these measured analog data signals into logic signals referred to as "scan values" which can also be received as digital signals when the sensor includes an Analog-to-Digital (ADC) converter, that along with override flags and values written via the supervisory computers as well as output status values also from the IO are used as inputs for the process controller. The process controller performs calculations using these inputs to generate control values as AOs and DOs. AIs, for example, may be sensor values such as temperature or pressure in form of electrical current (general 4-20 ma) or electrical voltage (generally 1-5 V). DIs, for example, may be valve open/close information or switch on/off status that have only 2 possible status, ON or OFF. AOs for example may be for driving a proportional valve, and DOs for example may be for driving open/close valves, lamps, horns or beacons.

In the case of redundant IOs, the scan values received by the process controllers that comprise AI, DI, as well as output status values also received from the IOs do not have to be equal for the respective process controllers that may be due to hardware and timing differences. However when used in an industrial application each process controller needs to use time-synchronized scan values so that both of the redundant process controllers agree on the received scan values so that they agree on their calculated DO and AO values because otherwise the respective controller applications can take a different control path. The process controllers evaluate the scan values, and other variables such as output status, and override values and flags received from the supervisory computers, as it executes a stored computer program. The process controller then generates DO and AO as control signals, and sends these control signals to the IO(s) to update the status of these outputs.

Regarding the outputs, in the known redundant control system the process controllers connects to redundant IO modules so that there are two separate IO modules that each convert the control signals which can be DO and AO received from the process controller into digital or analog values that can be used to control field devices such as actuators. The calculated output values generated by the process controllers comprising DO and AO are also be synchronized as the redundant IO channels of the respective process controllers are tied together and the redundant IO channels must have the same output state/value. Besides the needed data synchronization between the redundant process controllers, a plurality of statuses generally need to also be synchronized including maintenance overrides, loop faults, channel faults, and fault reaction.

US4672529 discloses a self contained data acquisition and control system and apparatus with direct process input and output capability. Designed to operate within the harsh environment of a process zone, the apparatus employs a variety of process monitoring and control modules which perform under the direction of redundant computer controllers. These controllers provide control data loading to the modules as well as receive and transmit process status data. The modules are each formed having a hardware control and status monitoring circuit which performs in conjunction with a module microprocessor based control. One module provides for field contact actuation in combination with a technique for deriving data signals form the contact and associated field wiring for evaluating the performance of those same field contacts. Another module provides an isolated electronic switch output wherein the battery power supply or the like is provided with the control apparatus and the status of the load, the power supply and the switch itself is ascertained, while a third analog output module uniquely combines two analog outputs in redundancy an further exhibits status monitoring including full loop status monitoring from the point of derivation of the analog output at a digital analog to converter to the return current from the load itself.

EP0416891 discloses a plant control system includes a plant control network for performing the overall supervision of a process being controlled. The plant control network has at least one external bus for operatively connecting a corresponding interface apparatus to the plant control network. Further, each interface apparatus interfaces with at least one predetermined field device, each field device being a type having a corresponding predetermined signal type. The interface apparatus comprises a controller for controlling the input/output (I/O) of the interface apparatus. At least one I/O module, connected to the controller, preprocesses information signals to and from the predetermined field device connected to the I/O module.

### SUMMARY

The present invention in its various aspects is as set out in the appended claims.

This Summary is provided to introduce a brief selection of disclosed concepts in a simplified form that are further described below in the Detailed Description including the drawings provided. This Summary is not intended to limit the claimed subject matter's scope.

Disclosed process variable (PV) data synchronization and calculation between process controllers is implemented by process controllers that utilize only logic gates (e.g., AND, OR, or XOR gates) for performing the logical operations and calculations from the input scan data and output status values received from their IO, and override values and flags from the supervisory computer performed without any conditional branching. "No conditional branching" as used herein means for each data channel the logical operation is performed by the process controller independent of state or condition (e.g., a state or condition may be for example a software structure IF (condition is true) THEN do ELSE do), which is enabled by organizing the data in the processor's associated memory in a particular way that is described herein. As used herein, "memory organization" refers the location and organization of the bits and bytes in the processor's memory which enables the above described data and status synchronization using only logic gates that are exclusive of any conditional branching for synchronizing the scan values, output status, override flags and override values, and calculating and synchronizing DO, and AO.

The PV is the measured value of the process output, such as the temperature of a fluid exiting a tank, where the value of the PV is transmitted as a sensor signal from a sensor to the process controllers via the IOs which generates scan data comprising AI and DI, and output status. Disclosed data synchronization between process controllers makes the time for the process controllers to perform the calculations deterministic and always essentially the same so that they stay on the same control cycle.

The disclosed data synchronization and calculation between process controller arrangement provides better performance, a deterministic throughput, and can be represented as electronic schematic format which enables implementation with discrete electronics or PLDs. Disclosed process data synchronization and calculation between redundant process controller embodiments can generally be applied to any method or system architecture where multiple input values are available and need to be synchronized between redundant processor controllers.

### BRIEF DESCRIPTION OF THE DRAWINGS

FIG. 1 shows an example industrial control system including a redundant process controller arrangement including a primary process controller and a redundant secondary controller both coupled through IOs to control the same processing equipment, according to an example embodiment.
FIGs. 2A and 2B each depict one possible method of performing memory organization for controller memory being "organized per property" shown in FIG. 2A and "organized per point" shown in FIG. 2B.
FIG. 3A depicts system components associated with example redundant legs A and B in a redundant IO module arrangement.
FIG. 3B depicts system components associated with a non-redundant IO module arrangement which explains the 'redundant channel' value used with FIGs. 5A-D described below.
FIG. 4 shows a redundant process controller coupled to a redundant IO module.
FIG. 5A shows an example all logic implementation exclusive of any conditional branching for process controller DO calculations that provides DO synchronization for redundant process controllers, according to an example embodiment.
FIG. 5B shows an example all logic implementation exclusive of any conditional branching for process controller DI synchronization for redundant process controllers, according to an example embodiment.
FIG. 5C shows an example all logic implementation exclusive of any conditional branching for process controller AI synchronization for redundant process controllers, according to an example embodiment.
FIG. 5D shows an example all logic implementation exclusive of any conditional branching for process controller AO calculations that provides AO synchronization for redundant process controllers, according to an example embodiment.

### DETAILED DESCRIPTION

Disclosed embodiments are described with reference to the attached figures, wherein like reference numerals, are used throughout the figures to designate similar or equivalent elements. The figures are not drawn to scale and they are provided merely to illustrate aspects disclosed herein. Several disclosed aspects are described below with reference to example applications for illustration. It should be understood that numerous specific details, relationships, and methods are set forth to provide a full understanding of the embodiments disclosed herein.

Also, the terms "coupled to" or "couples with" (and the like) as used herein without further qualification are intended to describe either an indirect or direct electrical connection. Thus, if a first device "couples" to a second device, that connection can be through a direct electrical connection where there are only parasitics in the pathway, or through an indirect electrical connection via intervening items including other devices and connections. For indirect coupling, the intervening item generally does not modify the information of a signal but may adjust its current level, voltage level, and/or power level.

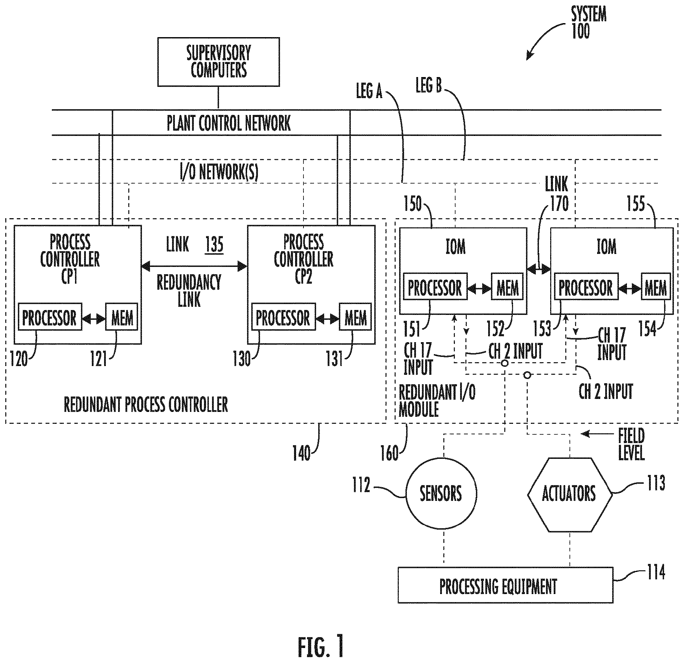

FIG. 1 shows an example fault-tolerant industrial control system 100 comprising a redundant process controller 140 shown as comprising a first process controller (CP1) including a first CPU or first processor shown as processor 120 including a first associated memory 121, and a second redundant process controller (CP2) including a second CPU or processor shown as processor 130 including a second associated memory 131. The memories 121 and 131 generally comprise a battery backed-up random access memory (RAM), or some other non-volatile memory. The processors 120, 130 can comprise a microprocessor, digital signal processor (DSP), or a microcontroller unit (MCU).

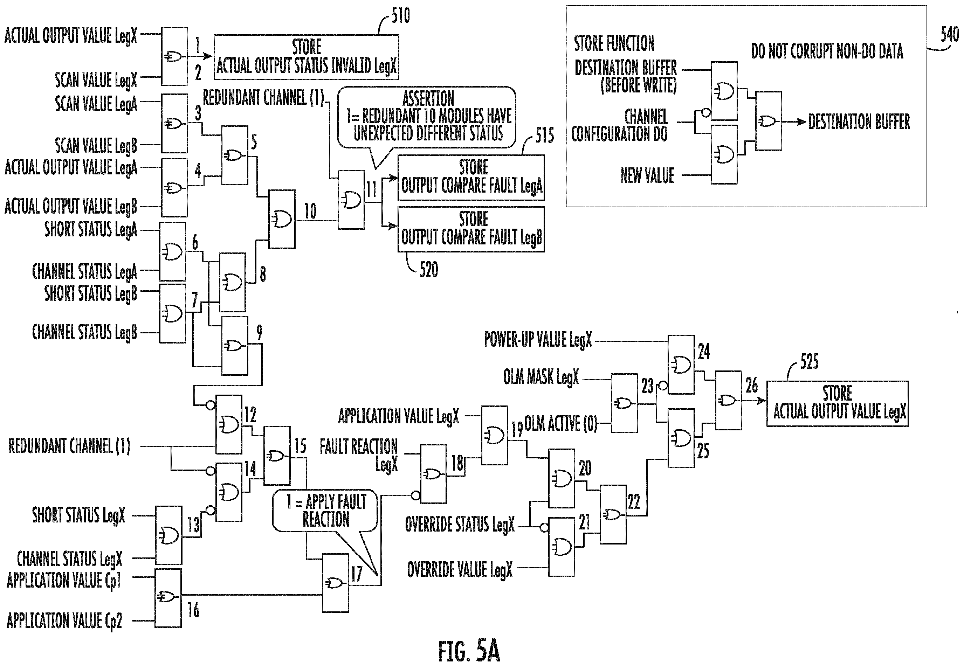

A redundancy link 135 is for sharing data between CP1 and CP2. The redundancy link 135 does not perform any calculations. The distributed data shared between the CPs includes a plurality of channel configurations comprising DO, DI, AI and AO. FIGs. 5A-5D described below shows example all logic gate implementations for process controller synchronization of AI and DI and calculation of synchronized AO and DO, that can be used by CP1 and CP2 to ensure process controller synchronization for redundant process controllers.

A redundant IO module 160 comprises a first IO module (IOM) 150 and a second IOM 155 that are between the process controller 140 and field devices comprising sensors 112 and actuators 113 which are coupled to processing equipment 114. The first IOM 150 and a second IOM 155 are shown receiving a channel (ch) shown as ch17 input from the sensors 112 and transmitting a ch shown as a ch2 output (AO or DO received from their CP) to the sensors 112 and to the actuators 113.

The link 170 shown between the first IOM 150 and a second IOM 155 is the redundancy link between these redundant IOM. The IOMs 150 and 155 generate what is termed 'scan values' (AI and DI) and output status values from the data received from the field devices 112, 113 which is used by the process controller during 'scan times'. During a scan cycle by process controllers CP1 and CP2, as with other process controllers, there are 5 main steps, comprising reading the scan values, output status, as well as the override values and override flags from the supervisory computer, executing the program, processing communication requests, executing controller diagnostics, and using the scan values from the IO(s) along with output status, override flags and override values from the supervisory computer for calculating and writing outputs comprising AOs and DOs.

A first connection leg (shown as LegA) is shown connecting CP1 to the first IOM 150, and a second connection leg (shown as LegB) is shown connecting CP2 to the second IOM 155. In operation CP1 receives scan values and output status values from first IOM 150 over LegA and CP2 receives the scan values output status values from second IOM 155 over LegB. The legs can be wireless, or wired legs such as utilizing Ethernet.

As described above, the data synchronization and calculations performed by CP1 and CP2 has no conditional branching. An example of conditional branching is an IF (condition is true) THEN do ELSE do, so that for each channel the logical operation and calculation is performed by the process controllers CP1 and CP2 independent of state or condition (states such as used with IF (condition is true) THEN do ELSE do. After distribution of synchronized AI and DI data generated by one process controller over the redundancy link 135 this synchronized AI, DI data is stored in the other process controller's memory 121 or 131 which is enabled by disclosed memory organization. Memory organization performed by the process controllers, CP1 and CP2 takes care of gathering all the property information (properties comprising scan values, output status values, override flags and override values) and putting it into memory before sending it over the redundancy link 135 as one block or multiple blocks of data.

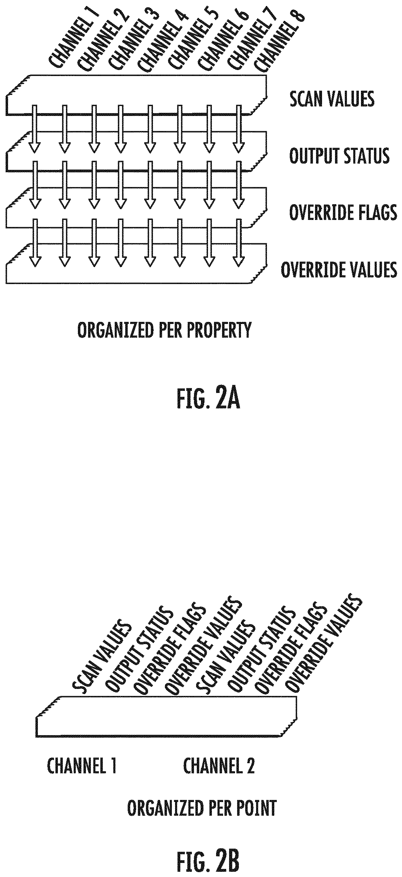

FIGs. 2A and 2B collectively depicts two example methods of performing memory organization that can be utilized by disclosed process controllers. The properties in FIG. 2A and 2B shown are scan values (AI and DI), output status, override flags, and override values. The "organized per property" shown in FIG. 2A is suited for the logic calculations shown as arrows pointing down with channel properties per column of memory. The "organized per point" method shown in FIG. 2B has the channel properties kept together in row blocks of memory. Either of these two example methods of performing memory organization may be used with disclosed embodiments.

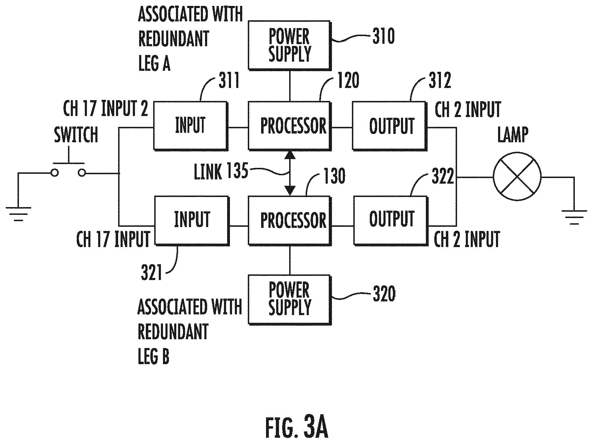

FIG. 3A depicts example system components associated with redundant leg A and leg B shown in FIG. 1 in a redundant IO module arrangement that are linked through their respective process controllers by the redundancy link 135. Processor 120 is powered by power supply 310, while processor 130 is powered by power supply 320. The IOM associated with LegA comprises input 311 and output 312. The IOM associated with LegB comprises input 321 and output 322.

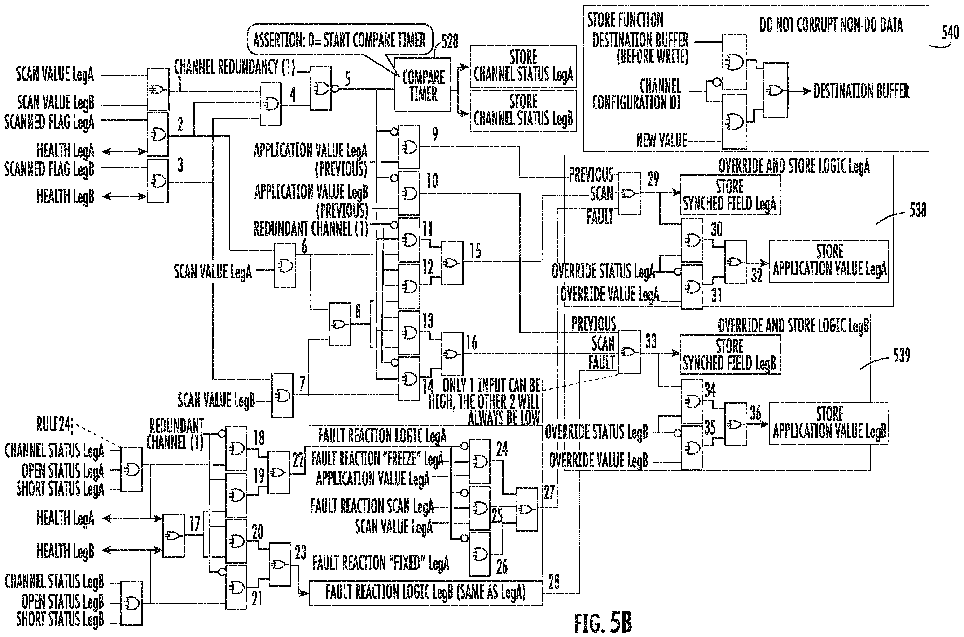

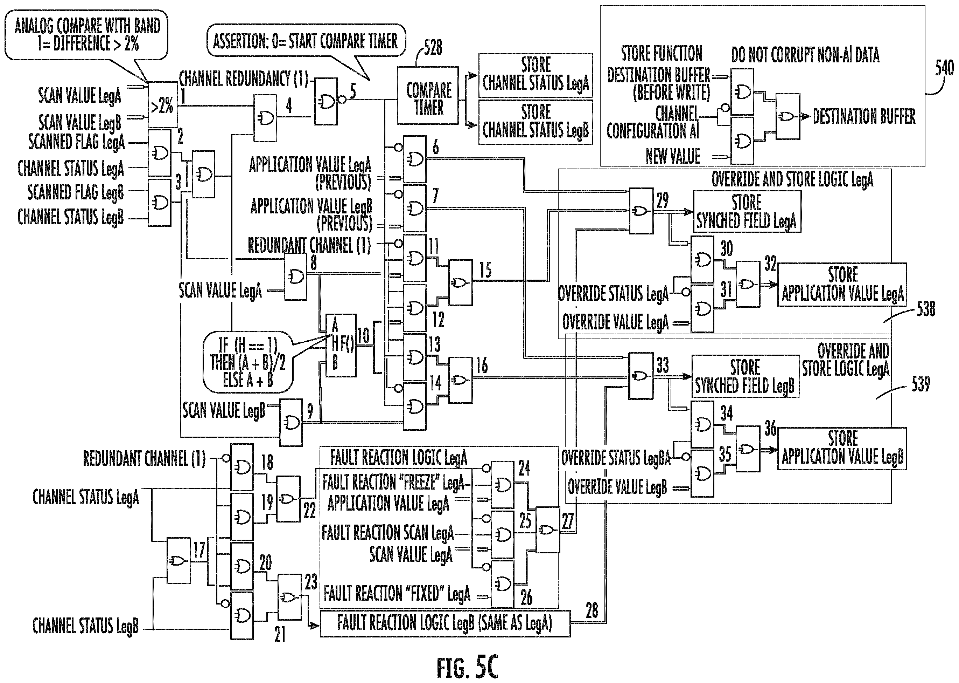

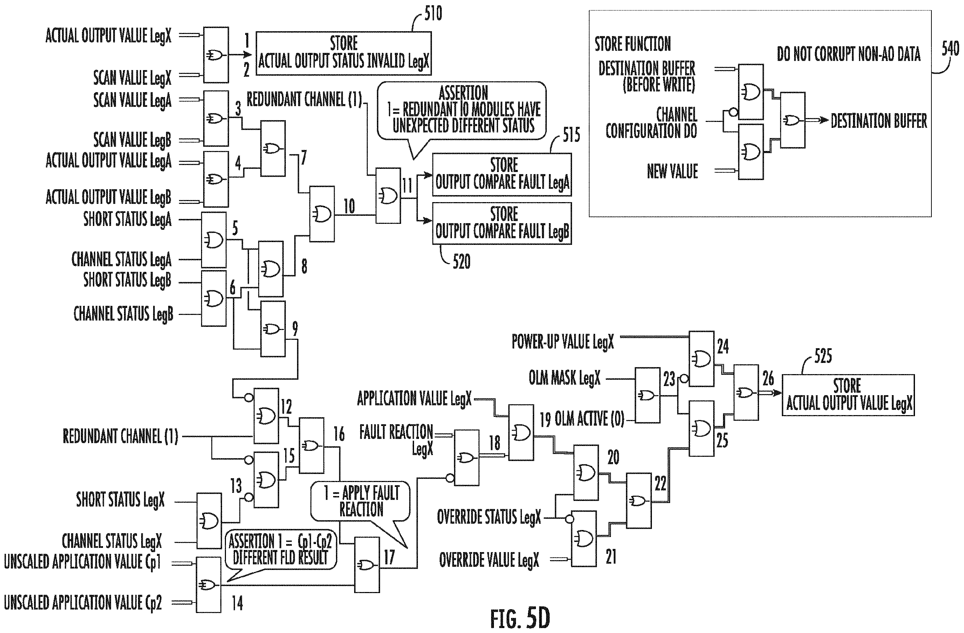

As noted above in operation the processor 120 receives scanned data values and output status values from the input 311 of its IOM over LegA and processor 120 receives the scanned values output status values from the input 321 of its IOM over LegB. Disclosed processors as well their associated IOs can all be combined in the same process controller module as shown in FIG. 1 and FIG. 3A, or the processors can be in one module and their inputs and outputs can be stored in separate process controller modules. Redundant IO as shown in FIG. 3A has the 'redundant channel' value as used with FIGs. 5A, 5B, 5C, 5D set to logical'1' (high).

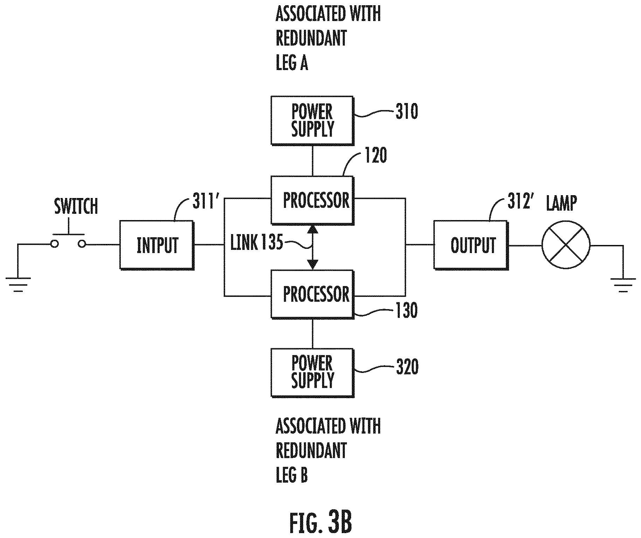

FIG. 3B depicts example system components associated with non-redundant IO shown as input 311' and output 312' connected to both of the redundant leg A and leg B associated with the process controllers shown in FIG. 1 that are linked by redundancy link 135. Leg A is associated with processor 120 and Legb with processor 130. Non-redundant IO has the 'redundant channel' value as used with FIG 5A, 5B, 5C, 5D set to logical '0' (low).

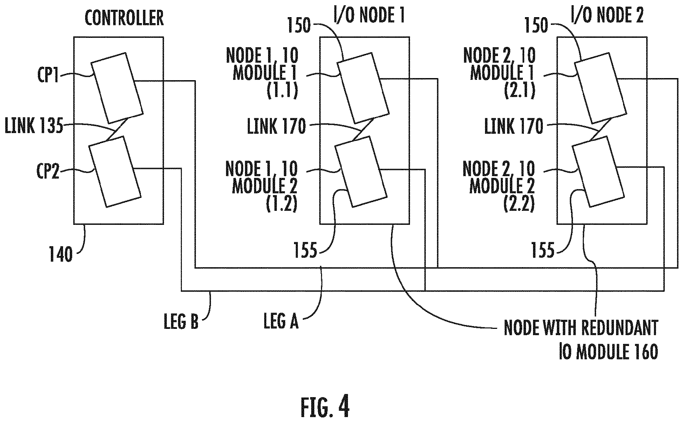

FIG. 4 depicts a redundant process controller 140 along with a redundant IO module 160 comprising IOMs 150 and 155. The IOMs 150 and 155 are each shown having modules at Node 1, with IOM 1.1 for IOM 150 and IOM 1.2 for IOM 155 at Node 1, and at Node 2 with IOM 2.1 for IOM 150 and IOM 2.2 for IOM 155. There is a redundancy link 170 shown at each node.

The IOMs 150 including IOM 1.1 and IOM 2.1 are connected by Leg A to CP1, and IOMs 155 including IOM 1.2 and IOM 2.2 are connected by Leg B to CP2. The redundant process controller 140 performs some checks on the property data including scan data values (AI and DI) and output status values received from the IOMs 150, 155, and also performs logic calculations on the property data received to generate synchronized AI and DI, and calculates synchronized output control values AO and DO. Disclosed PV synchronization and calculation as described above provides synchronization, checking and the necessary fault reaction that the redundant process controller 140 performs. The input values and output values are scanned and controlled by the IOMs 150 and 155. The IO modules 150, 155 periodically provide the scan values and output status values to the redundant process controller 140 and the redundant process controller 140 sends the synchronized output values (AO and DO) to the IOMs 150, 155.

In operation, during each control cycle CP1 receives the property data including scan values and output status values from the IO modules 1.1 and 2.1 over LegA. CP2 receives the property data including scan values and output status values from IO module 1.2 and 2.2 over LegB. CP1 and CP2 exchange all the data comprising scan values (AI and DI), output status values, and override values, and override flags over the redundancy link 135 so that both CP1 and CP2 have the values from both Leg A and Leg B. CP1 and CP2 will each perform synchronization and calculations with an all logic implementation, and CP1 and CP2 will each generate output values AO and DO. Due to the synchronization and calculation it is guaranteed that CP1 and CP2 will receive the same input values (scan values, output status, override flags and override values) at essentially the same time (to be in the same control cycle) and calculate and then transmit the same output values AO and DO.

### EXAMPLES

Disclosed embodiments are further illustrated by the following specific Examples, which should not be construed as limiting the scope or content of this Disclosure in any way. The input channel being redundant or non-redundant is handled by disclosed logic by setting to logical '1' when the channel is redundant, and by setting to logical '0' when the channel is non-redundant. Output status values disclosed above are shown in FIGs. 5A-D as "actual output values".

FIG. 5A shows an example all logic implementation exclusive of any conditional branching for process controller DO PV calculations that provides DO synchronization for redundant process controllers. With every important logical output there is a number shown as 1 to 26 in FIG. 5A which is explained in detail below. The store function box 540 shown is provided to avoid overwriting the values of the 'other' data types. For example, to prevent that the result of the DO-sync in FIG. 5A overwriting memory locations assigned to DI in FIG 5B. The store function box 540 can thus enable mixing data types.
Note 1: the "Store: actual output status invalid LegX" 510 in the upper-left of FIG. 5A takes effect on the same control cycle so that an actual vs. scan value mismatch will result in a bad status and fault-reaction being applied on the same control cycle.
Note 2: As pre-processing in case of redundant configurations with one CP inactive (e.g. powered down) the active CP will copy its own values to its data buffers (see memory 121 and memory 131 in FIG. 1) that are normally filled with the PV values (AI, DI) received from the redundant CP. This assures that even if the redundant CP is disconnected or powered-off, the memory locations assigned to the redundant CP hold valid scan, output status, override flags and override value data. Having valid data in all buffers avoids exceptions in the synch functions and assures redundant CP-state independent execution times.
Note 3: For labels 6, 7 and 13 open loop is not mentioned in FIG. 5A as it has no influence on the calculated DO value. For the short circuit situation it is different as the software (run by the process controller) de-energizes (drive to low, logical 0) the DO when it is known that there is a short circuit. Label 1, 2: Comparing (XOR) the 'actual output value' LegX with 'scan value' LegX asserts that the output value did not change since the last update. As the scan value is read from the IO module a difference is either caused by a random IO module hardware fault or a random process controller hardware fault. Being an XOR gate, when the actual output value (referred to with 'actual output value' LegX) and the expected (referred to with 'scan value' LegX) are equal the output of the XOR gate is low.
Label 3: Comparing (XOR) the 'scan values' of both legs in a redundant configuration asserts that redundant scan values have an identical value. To reduce the number of checks the filtering for redundancy and channel health can be designed as overall post-check, where if a channel is faulty or not redundant the compare errors are suppressed. As the compare is between CP memory cells, a difference is caused by a random CP hardware fault. When both scan values are equal the output of the XOR gate is low.
Label 4: Comparing (XOR) the 'actual output values' of both legs in a redundant configuration asserts that redundant outputs have an identical value. To reduce the number of checks the filtering for redundancy and channel health is designed as overall post-check: if a channel is faulty or not redundant the compare errors are suppressed. As the compare is between CP memory cells a difference is caused by a random CP hardware fault.
Label 3, 4, 5, 6, 7, 8, 10, 11: Compares difference for a redundant channel. Store the output compare fault LegA 515 and the output compare fault LegB 520.
Label 12, 13, 14, 15, 16, 17, 18, 19: are application values with a fault reaction applied.
Label 16: Comparing the 'application values' calculated by redundant CPs asserts that both CPs calculated identical output values. As redundant CP are always running identical firmware and application any difference is caused by either a random CP hardware fault or an input synchronization fault (software).
Label 20, 21, 22: Application value with an override value applied.

Labels 23, 24, 25, 26: Application value with On-line modification (OLM) applied. In a redundant configuration both CP1 and CP2 always execute the On-Line Modification (OLM) which allows one to change one or more channels from for example DI to AI or to add a new channel without losing the values from the previously configured channels. This allows no-break process control) simultaneously. The OLM flags are synchronized before use. Label 26 is the input which is stored as store actual output value LegX 525.

FIG. 5B shows an example all logic implementation exclusive of any conditional branching for process controller DI synchronization for redundant process controllers, according to an example embodiment. With every significant logical output there is a number shown in FIG. 5B which is explained in detail below:
Note 1: Compare timer functionality; if the two legs have a different channel status then both use the previous channel status for the duration of one control cycle.
Label 1: Comparing the 'Scan values' of both legs in a redundant configuration asserts that redundant scan values have an identical value.
Label 1, 2, 3, 4, 5: Compare differences for a redundant channel. Start a compare timer.
Label 9, 10: Use previous value LegX when there is difference between Legs.
Label 2, 6, 7, 8, 11, 12, 13, 14, 15, 16: At least one healthy channel which has a valid scan value, so scan value is passed for LegX.
Label 17, 18, 19, 20, 21, 22, 23, 37, 38: Determines if a fault reaction must be applied for LegX. Label 37: Indicates that channel LegA is healthy and there is no open and no short. Outcome of this logical function is used as input elsewhere in FIG. 5B diagram as label "health LegA".
Label 38: Indicates that channel LegB is healthy and there is no open and no short. Outcome of this logical function is used as input elsewhere in FIG. 5B as label "health LegB".
Label 24, 25, 26, 27: Applies a fault reaction for LegA. Although three fault reactions can be configured, only one fault reaction can be active:
   1. "freeze"; takes the application value LegA as input meaning it freezes the value to the previous application value.
   2. "scan"; takes the scan value LegA meaning it will (try to) follow the field.
   3. "fixed"; the configured value is taken as is.
Label 28: Same as label 27 for LegB.
   Override and store logic Lega block 538 comprises labels 29-32. Label 29: Combination of the previous value (due to compare timer), the scan (actual value) and fault reaction value (channel is faulty) for LegA. For non-redundant IO module the first module could be connected to LegA and the second module to LegB. To support this one uses the synced value from that Leg.
Label 30, 31, 32: Application value with fault reaction and override applied for LegA.
   Override and store logic Legb block 539 comprises labels 33-36. Label 33: Combination of the previous value (due to the compare timer 528), the scan (actual value) and fault reaction value (channel is faulty) for LegB. For non-redundant IO module the first module could be connected to LegA and the second module to LegB. To support this need one uses the synced value from that Leg.
Label 34, 35, 36: Application value with fault reaction and override applied for LegB.
   The Store function box 540 shown described above is also included in FIG. 5B.

FIG. 5C shows an example all logic implementation exclusive of any conditional branching for process controller AI calculations for redundant process controllers that provides that provides AI synchronization, according to an example embodiment. With every important logical output there is a number shown in FIG. 5C which is explained in detail below:
Note 1: Compare timer functionality; if the two legs have a different channel status then both shall use the previous channel status for the duration of one application cycle.
Note 2: For labels 2, 3 and 17 open loop and short circuit are not mentioned in FIG. 5C as it has no influence on the calculated AI value.
Label 1: Comparing the 'Scan values' of both legs in a redundant configuration asserts that redundant scan values have a value within a band.
Label 1, 2, 3, 4, 5: Compare difference for a redundant channel. Start compare timer.
Label 6, 7: Use previous value LegX when there is difference between Legs.
Label 2, 3, 8, 9, 10, 11, 12, 13, 14, 15, 16: When both redundant channels are healthy take the average of the two scan values (label 10). When there is one healthy channel take the scan value for LegX (label 15 and 16).
Label 17, 18, 19, 20, 21, 22, 23: Determine if fault reaction must be applied for LegX.
Label 24, 25, 26, 27: Applies fault reaction for LegA. Three fault reactions can be configured, only one fault reaction can be active:
   1. "freeze"; takes the application value LegA as input meaning it freezes the value to the previous application value.
   2. "scan"; takes the scan value LegA meaning it will (try to) follow the field.
   3. "fixed"; the configured value is taken as is.
Label 28: Same as label 27 for LegB.
   As with FIG. 5B Override and store logic Lega block 538 comprises labels 29-32. Label 29: Combination of the previous value (due to compare timer), the scan (actual value) and fault reaction value (channel is faulty) for LegA. For non-redundant IO module the first module could be connected to LegA and the second module to LegB. To support this need one uses the synced value from that Leg.
Label 30, 31, 32: Application value with fault reaction and override applied for LegA.
   As with FIG. 5B Override and store logic Legb block 539 comprises labels 33-36. Label 33: Combination of the previous value (due to compare timer), the scan (actual value) and fault reaction value (channel is faulty) for LegB. For non-redundant IO module the first module could be connected to LegA and the second module to LegB. To support this need one uses the synced value from that Leg.
Label 34, 35, 36: Application value with fault reaction and override applied for LegB.
   The store function box 540 shown described above is also included in FIG. 5C.

FIG. 5D shows an example all logic implementation exclusive of any conditional branching for process controller AO PV calculations that provides AO synchronization for redundant process controllers, according to an example embodiment. With every important logical output there is a number shown in FIG. 5D which is explained in detail below:
Note 1: the "Store: actual output status invalid LegX" in the upper-left of the FIG. 5D takes effect on the same cycle. I.e., an actual vs. scan value mismatch will result in a bad status and fault-reaction being applied on the same cycle.
Note 2: For labels 5, 6 and 13 open loop is not mentioned in this FIG. 5D as it has no influence on the calculated DO value. For the short it is different as there one wants the software to de-energize the DO when it is know that there is a short circuit.
Label 1, 2: Comparing (XOR) the 'actual output value' with 'scan value' asserts that the output value did not change since the last update. As the scan value is read from the IO module a difference is either caused by a random IO module hardware fault or a random CPM hardware fault. When both scan values are equal the output of the logic gate is low.
Label 3: Comparing (XOR) the 'Scan values' of both legs in a redundant configuration asserts that redundant scan values have an identical value. To reduce the number of checks the filtering for redundancy and channel health is designed as overall post-check: if a channel is faulty or not redundant the compare errors are suppressed. As the compare is between CP memory cells a difference is caused by a random CP hardware fault. When both scan values are equal the output of the logic gate is low.
Label 4: Comparing (XOR) the 'actual output values' of both legs in a redundant configuration asserts that redundant outputs have an identical value. To reduce the number of checks the filtering for redundancy and channel health is designed as overall post-check: if a channel is faulty or not redundant the compare errors are suppressed. As the compare is between CP memory cells a difference is caused by a random CP hardware fault.
Label 3, 4, 5, 6, 7, 8, 10, 11: Compare difference for a redundant channel. Store output compare fault.
Label 12, 13, 14, 15, 16, 17, 18, 19: Application value with fault reaction applied.
Label 20, 21, 22: Unscaled application value with override applied.
Label 23, 24, 25, 26: Unscaled application value with OLM applied. The store function box 540 shown described above is also included in FIG. 5D.

One having ordinary skill in the relevant art, however, will readily recognize that the disclosed embodiments can be practiced without one or more of the specific details or with other methods. In other instances, well-known structures or operations are not shown in detail to avoid obscuring aspects disclosed herein. Disclosed embodiments are not limited by the illustrated ordering of acts or events, as some acts may occur in different orders and/or concurrently with other acts or events. Furthermore, not all illustrated acts or events are required to implement a methodology in accordance with this Disclosure.

While various disclosed embodiments have been described above, it should be understood that they have been presented by way of example only, and not as a limitation. Numerous changes to the disclosed embodiments can be made in accordance with the Disclosure herein without departing from the scope of this Disclosure. Thus, the breadth and scope of this Disclosure should not be limited by any of the above-described embodiments. Rather, the scope of this Disclosure should be defined in accordance with the following claims and their equivalents.

## Claims

1. A fault-tolerant industrial control system (100), comprising:
plurality of field devices (112, 113);
a redundant controller (140) including a first process controller (CP1) including a first processor (120) with a first associated memory (121), and a parallel connected second redundant process controller (CP2) including a second processor (130) with a second associated memory (131);
a redundancy link (135) between said CP1 and CP2 for sharing data between said CP1 and said CP2;
said CP1 and said CP2 comprising logic gates exclusive of any conditional branching for performing data synchronization and calculations including a different logical arrangement for providing each of a digital output (DO), a digital input (DI), an analog input (AI), and an analog output (AO), and
at least one input/output (IO) module (150, 155) including a first IO processor (151, 153) including a first memory (152, 154) coupled by a first leg (LEG A) to said CP1 and by a second leg (LEG B) to said CP2,
wherein said IO module is coupled to said field devices (112, 113) that are coupled to processing equipment (114).

2. The fault-tolerant control system of claim 1, wherein said logic gates for said DO, DI, AI, and AO each include AND gates, OR gates, and XOR gates.

3. The fault-tolerant control system of claim 1, wherein said at least one IO module consists of a single IO module.

4. The fault-tolerant control system of claim 1, wherein said at least one IO module comprises a first IO module (150) and parallel connected second IO module (155).

5. The fault-tolerant control system of claim 1, wherein said first associated memory and second associated memory are both configured to have stored property data for a plurality of channels including properties comprising scan values, output status data, override flags, and override values organized per said property.

6. The fault-tolerant control system of claim 1, wherein said first associated memory and second associated memory are both configured to have stored property data for plurality of channels including properties comprising scan values, output status data, override flags, and override values per said plurality of channels.

7. A method of process data synchronization between redundant process controllers (140) of a fault-tolerant industrial control system (100), comprising:
providing a plurality of filed devices (112, 113);
providing a redundant controller (140) including a first process controller (CP1) including a first processor (120) with a first associated memory (121), and a parallel connected second redundant process controller (CP2) including a second processor (130) with a second associated memory (131), a redundancy link (135) between said CP1 and CP2 for sharing data between said CP1 and said CP2, said CP1 and said CP2 comprising logic gates exclusive of any conditional branching for performing data synchronization and calculations including a different logical arrangement for providing each of a digital output (DO), a digital input (DI), an analog input (AI), and an analog output (AO), and at least one input/output (IO) module including a first IO processor including a first memory coupled by a first leg (LEG A) to said CP1 and by a second leg (LEG B) to said CP2, wherein said IO module is coupled to said field devices (112, 113) that are coupled to processing equipment (114);
organizing property data for a plurality of channels received including properties comprising scan values, output status data, override flags, and override values in said first associated memory and in said second associated memory, and
performing logical operations using said logic gates to generate said DO, said DI, said AI, and said AO.

8. The method of claim 7, wherein said logic gates for said DO, DI, AI, and AO each include AND gates, OR gates, and XOR gates.

9. The method of claim 7, wherein said at least one IO module consists of a single IO module.

10. The method of claim 7, wherein said at least one IO module comprises a first IO module (150) and parallel connected second IO module (155).

11. The method of claim 7, wherein said organizing property data comprises organizing per said property.

12. The method of claim 7, wherein said organizing property data comprises organizing per channel for each of said plurality of channels.

## Patentansprüche

1. Fehlertolerantes industrielles Steuersystem (100), das Folgendes umfasst:
mehrere Feldvorrichtungen (112, 113);
eine redundante Steuereinheit (140), die eine erste Prozesssteuereinheit (CP1), die einen ersten Prozessor (120) mit einem ersten zugeordneten Speicher (121) enthält, und eine parallel geschaltete zweite redundante Prozesssteuereinheit (CP2), die einen zweiten Prozessor (130) mit einem zweiten zugeordneten Speicher (131) enthält, umfasst;
eine Redundanzverbindung (135) zwischen der CP1 und der CP2, um Daten zwischen der CP1 und der CP2 gemeinsam zu verwenden;
wobei die CP1 und die CP2 Logik-Gates ohne bedingte Verzweigung zum Ausführen einer Datensynchronisierung und von Berechnungen umfassen, die eine andere logische Anordnung zum Liefern einer digitalen Ausgabe (DO), einer digitalen Eingabe (DI), einer analogen Eingabe (AI) und einer analogen Ausgabe (AO) enthalten, und
mindestens ein Eingabe/Ausgabe-Modul (IO-Modul) (150, 155), das einen ersten IO-Prozessor (151, 153) enthält, der einen ersten Speicher (152, 154) enthält, der durch einen ersten Zweig (LEG A) an die CP1 und durch einen zweiten Zweig (LEG B) an die CP2 gekoppelt ist,
wobei das IO-Modul an die Feldvorrichtungen (112, 113) gekoppelt ist, die an das Verarbeitungsgerät (114) gekoppelt sind.

2. Fehlertolerantes Steuersystem nach Anspruch 1, wobei die Logik-Gates für die DO, DI, AI und AO jeweils UND-Gates, ODER-Gates und XOR-Gates enthalten.

3. Fehlertolerantes Steuersystem nach Anspruch 1, wobei mindestens ein IO-Modul aus einem einzigen IO-Modul besteht.

4. Fehlertolerantes Steuersystem nach Anspruch 1, wobei das mindestens eine IO-Modul ein erstes IO-Modul (150) und ein parallel geschaltetes zweites IO-Modul (155) umfasst.

5. Fehlertolerantes Steuersystem nach Anspruch 1, wobei der erste zugeordnete Speicher und der zweite zugeordnete Speicher jeweils konfiguriert sind, Eigenschaftsdaten für mehrere Kanäle zu speichern, die Eigenschaften enthalten, die Abtastwerte, Ausgabezustandsdaten, Übersteuerungsmarkierungen und Übersteuerungswerte, die pro Eigenschaft gegliedert sind, enthalten.

6. Fehlertolerantes Steuersystem nach Anspruch 1, wobei der erste zugeordnete Speicher und der zweite zugeordnete Speicher jeweils konfiguriert sind, Eigenschaftsdaten für mehrere Kanäle zu speichern, die Eigenschaften enthalten, die Abtastwerte, Ausgabezustandsdaten, Übersteuerungsmarkierungen und Übersteuerungswerte pro mehrere Kanäle umfassen.

7. Verfahren einer Prozessdatensynchronisation zwischen redundanten Prozesssteuereinheiten (140) eines fehlertoleranten industriellen Steuersystems (100), das Folgendes umfasst:
Bereitstellen mehrerer Feldvorrichtungen (112, 113);
Bereitstellen einer redundanten Steuereinheit (140), die enthält: eine erste Prozesssteuereinheit (CP1), die einen ersten Prozessor (120) mit einem ersten zugeordneten Speicher (121) enthält, und eine parallel geschaltete zweite redundante Prozesssteuereinheit (CP2), die einen zweiten Prozessor (130) mit einem zweiten zugeordneten Speicher (131) enthält, eine Redundanzverbindung (135) zwischen der CP1 und der CP2, um Daten zwischen der CP1 und der CP2 gemeinsam zu benutzen, wobei die CP1 und die CP2 Logik-Gates ohne bedingte Verzweigung zum Ausführen einer Datensynchronisierung und von Berechnungen umfassen, die eine andere logische Anordnung zum Liefern jeder einer digitalen Ausgabe (DO), einer digitalen Eingabe (DI), einer analogen Eingabe (AI) und einer analogen Ausgabe (AO) enthalten, und mindestens ein Eingabe/Ausgabe-Modul (IO-Modul), das einen ersten IO-Prozessor enthält, der einen ersten Speicher enthält, der durch einen ersten Zweig (LEG A) an die CP1 und durch einen zweiten Zweig (LEG B) an die CP2 gekoppelt ist, wobei das IO-Modul an die Feldvorrichtungen (112, 113) gekoppelt ist, die an ein Verarbeitungsgerät (114) gekoppelt sind;
Gliedern von Eigenschaftsdaten für mehrere Kanäle, die empfangen werden und die Eigenschaften enthalten, die Abtastwerte, Ausgabezustandsdaten, Übersteuerungsmarkierungen und Übersteuerungswerte umfassen, in dem ersten zugeordneten Speicher und in dem zweiten zugeordneten Speicher und
Ausführen von logischen Vorgängen unter Verwendung der Logik-Gates, um die DO, die DI, die AI und die AO zu erzeugen.

8. Verfahren nach Anspruch 7, wobei die Logik-Gates für die DO, DI, AI und AO jeweils UND-Gates, ODER-Gates und XOR-Gates enthalten.

9. Verfahren nach Anspruch 7, wobei das mindestens eine IO-Modul aus einem einzigen IO-Modul besteht.

10. Verfahren nach Anspruch 7, wobei das mindestens eine IO-Modul ein erstes IO-Modul (150) und ein parallel geschaltetes zweites IO-Modul (155) umfasst.

11. Verfahren nach Anspruch 7, wobei das Gliedern von Eigenschaftsdaten umfasst, pro Eigenschaft zu gliedern.

12. Verfahren nach Anspruch 7, wobei das Gliedern von Eigenschaftsdaten umfasst, pro Kanal für jeden der mehreren Kanäle zu gliedern.

## Revendications

1. Système (100) de commande industrielle tolérant aux pannes, comprenant :
une pluralité de dispositifs de terrain (112, 113) ;
un contrôleur redondant (140) comportant un premier contrôleur de processus (CP1) comportant un premier processeur (120) doté d'une première mémoire associée (121) et un deuxième contrôleur de processus redondant (CP2) connecté en parallèle comportant un deuxième processeur (130) doté d'une deuxième mémoire associée (131) ;
une liaison redondante (135) entre lesdits CP1 et CP2 pour le partage de données entre ledit CP1 et ledit CP2 ;
ledit CP1 et ledit CP2 comprenant des portes logiques excluant tout branchement conditionnel pour la réalisation d'une synchronisation de données et de calculs comportant un agencement logique différent pour la fourniture de chaque élément parmi une sortie numérique (DO), une entrée numérique (DI), une entrée analogique (AI) et une sortie analogique (AO), et
au moins un module d'entrée/sortie (IO) (150, 155) comportant un premier processeur IO (151, 153) comportant une première mémoire (152, 154) couplée par une première branche (LEG A) audit CP1 et par une deuxième branche (LEG B) audit CP2,
ledit module IO étant couplé auxdits dispositifs de terrain (112, 113) qui sont couplés à un équipement de traitement (114).

2. Système de commande tolérant aux pannes selon la revendication 1, dans lequel lesdites portes logiques pour lesdites DO, DI, AI, AO comportent chacune des portes ET, des portes OU et des portes OU exclusif.

3. Système de commande tolérant aux pannes selon la revendication 1, dans lequel ledit au moins un module IO se compose d'un unique module IO.

4. Système de commande tolérant aux pannes selon la revendication 1, dans lequel ledit au moins un module IO comprend un premier module IO (150) et un deuxième module IO (155) connecté en parallèle.

5. Système de commande tolérant aux pannes selon la revendication 1, dans lequel lesdites première mémoire associée et deuxième mémoire associée sont toutes deux configurées pour contenir des données de propriétés enregistrées pour une pluralité de canaux comportant des propriétés comprenant des valeurs de scan, des données d'état de sortie, des drapeaux d'écrasement et des valeurs d'écrasement, organisées par dite propriété.

6. Système de commande tolérant aux pannes selon la revendication 1, dans lequel lesdites première mémoire associée et deuxième mémoire associée sont toutes deux configurées pour contenir des données de propriétés enregistrées pour une pluralité de canaux comportant des propriétés comprenant des valeurs de scan, des données d'état de sortie, des drapeaux d'écrasement et des valeurs d'écrasement par dite pluralité de canaux.

7. Procédé de synchronisation de données de processus entre des contrôleurs de processus redondants (140) d'un système (100) de commande industrielle tolérant aux pannes, comprenant :
la fourniture d'une pluralité de dispositifs de terrain (112, 113) ;
la fourniture d'un contrôleur redondant (140) comportant un premier contrôleur de processus (CP1) comportant un premier processeur (120) doté d'une première mémoire associée (121) et un deuxième contrôleur de processus redondant (CP2) connecté en parallèle comportant un deuxième processeur (130) doté d'une deuxième mémoire associée (131), d'une liaison redondante (135) entre lesdits CP1 et CP2 pour le partage de données entre ledit CP1 et ledit CP2, ledit CP1 et ledit CP2 comprenant des portes logiques excluant tout branchement conditionnel pour la réalisation d'une synchronisation de données et de calculs comportant un agencement logique différent pour la fourniture de chaque élément parmi une sortie numérique (DO), une entrée numérique (DI), une entrée analogique (AI) et une sortie analogique (AO), et
d'au moins un module d'entrée/sortie (IO) comportant un premier processeur IO comportant une première mémoire couplée par une première branche (LEG A) audit CP1 et par une deuxième branche (LEG B) audit CP2, ledit module IO étant couplé auxdits dispositifs de terrain (112, 113) qui sont couplés à un équipement de traitement (114) ;
l'organisation de données de propriétés pour une pluralité de canaux reçus comportant des propriétés comprenant des valeurs de scan, des données d'état de sortie, des drapeaux d'écrasement et des valeurs d'écrasement dans ladite première mémoire associée et dans ladite deuxième mémoire associée, et
la réalisation d'opérations logiques au moyen desdites portes logiques afin de générer ladite DO, ladite DI, ladite AI et ladite AO.

8. Procédé selon la revendication 7, dans lequel lesdites portes logiques pour lesdites DO, DI, AI, AO comportent chacune des portes ET, des portes OU et des portes OU exclusif.

9. Procédé selon la revendication 7, dans lequel ledit au moins un module IO se compose d'un unique module IO.

10. Procédé selon la revendication 7, dans lequel ledit au moins un module IO comprend un premier module IO (150) et un deuxième module IO (155) connecté en parallèle.

11. Procédé selon la revendication 7, dans lequel ladite organisation de données de propriétés comprend l'organisation par dite propriété.

12. Procédé selon la revendication 7, dans lequel ladite organisation de données de propriétés comprend l'organisation par canal pour chacun de ladite pluralité de canaux.
